# EUROPEAN PATENT APPLICATION

(11) **EP 4 834 630 A1**
(43) Date of publication of application: **04.11.2026**
(21) Application number: 26175425.3
(22) Date of filing: 29.04.2026
(51) Int. Cl.: B60K 15/05

(54) **COVER ASSEMBLY**

(30) Priority: 30.04.2025 CN 202510570504
(71) Applicant: Illinois Tool Works Inc., Glenview IL 60025 (US)
(72) Inventor: SUN, Yuan, Glenview, 60025 (US)
(74) Representative: HGF

(57) **Abstract**

Disclosed is a cover assembly. The cover assembly includes a housing, a cover body, and a flip member. The housing has a cavity. The cover body is movable relative to the housing between an open position in which the cover body exposes the cavity and a closed position in which the cover body covers the cavity. The flip member is connected to the cover body and configured to bring the cover body to move between the open position and the closed position. The cover body is pivotably connected to the flip member, and a pivotal movement of the cover body relative to the flip member can trigger a movement of the cover body relative to the housing. The cover assembly provided by the present disclosure allow most region of the cover body can serve as a pressable region for user operation, thereby facilitating user operation and improving user experience.

## Description

### TECHNICAL FIELD

The present disclosure relates to the field of vehicles, and more particularly, to a cover assembly for a charging port or a refueling port.

### BACKGROUND

A cover for a refueling port or a charging port of a vehicle is used to open and close the charging port or the refueling port of the vehicle. The cover for the refueling port or the charging port is movably mounted on a vehicle body. The cover for the refueling port or the charging port has a closed position covering the refueling port or the charging port and an open position exposing the refueling port or the charging port, and is movable between the closed position and the open position. Normally, the cover for the refueling port or the charging port is in the closed position. When refueling or charging is required, user needs to press a specific region of the cover for the refueling port or the charging port to trigger the cover for the refueling port or the charging port to move from the closed position to the open position.

### SUMMARY

After in-depth research, the inventor has found that in the existing cover for the refueling port or the charging port, the specific region has a small area and it is difficult for a user to locate accurately in the specific region. In addition, in order to achieve an effective triggering, a pressing force value applied by the user at different points within the specific region is inconsistent, resulting in poor user experience. In order to facilitate user operation and improve the user experience, there is a need in the industry to improve the cover for the refueling port or the charging port.

An object of the present disclosure is intended to solve at least one of the above-mentioned problems and/or disadvantages existing in the related art.

According to an aspect of the present disclosure, there is provided a cover assembly for a charging port or a refueling port, the cover assembly includes a housing, a cover body and a flip member. The housing has a cavity. The cover body is movable relative to the housing between an open position in which the cover body exposes the cavity and a closed position in which the cover body covers the cavity. The flip member is connected to the cover body and configured to bring the cover body to move relative to the housing between the open position and the closed position. The cover body is pivotably connected to the flip member, and a pivotal movement of the cover body relative to the flip member can trigger a movement of the cover body relative to the housing.

According to one exemplary embodiment of the present disclosure, the cover body includes a trigger portion for triggering the movement of the cover body relative to the housing, and the pivotal movement of the cover body relative to the flip member can trigger a movement of the trigger portion relative to the housing.

According to one exemplary embodiment of the present disclosure, the cover body has a first end and a second end opposite to the first end, the trigger portion is provided at the cover body adjacent to the first end, and the cover body is pivotably connected to the flip member adjacent to the second end.

According to one exemplary embodiment of the present disclosure, the cover assembly may further include: a pivot shaft via which the cover body is pivotably connected to the flip member; wherein the cover body is pivotable about the pivot shaft relative to the flip member between the closed position and a trigger position, wherein in the closed position, the cover body abuts against the flip member so that the cover body is kept to be fixed relative to the flip member, and in the trigger position, the movement of the trigger portion of the cover body triggers the movement of the cover body from the closed position to the open position.

According to one exemplary embodiment of the present disclosure, the cover assembly may further include: a return member provided on the pivot shaft and abutting between the cover body and the flip member; wherein the return member is configured to provide an elastic force when the cover body is in the trigger position, so that the cover body is returned from the trigger position to the closed position after a pressing force applied to the cover body is released.

According to one exemplary embodiment of the present disclosure, the return member is further configured to provide an elastic force when the cover body is in the closed position, so that the cover body is kept to be fixed relative to the flip member.

According to one exemplary embodiment of the present disclosure, the cover body is divided into a pressable region and a non-pressable region bounded by an orthographic projection of the pivot shaft on the cover body, and an area of the pressable region is larger than that of the non-pressable region.

According to one exemplary embodiment of the present disclosure, in the non-pressable region, the cover body has a first surface facing the flip member, and the flip member has a second surface facing the cover body; wherein in the closed position the first surface abuts against the second surface; and wherein in the trigger position the first surface is separated from the second surface.

According to one exemplary embodiment of the present disclosure, the cover assembly may further include: a microswitch provided at a bottom wall of the cavity; wherein the trigger portion extends from an inner side of the cover body toward the bottom wall of the cavity; and wherein in the closed position the trigger portion does not trigger the microswitch, and in the trigger position the trigger portion triggers the microswitch.

According to another exemplary embodiment of the present disclosure, the cover assembly may further include: a microswitch provided at the trigger portion; wherein the trigger portion extends from an inner side of the cover body toward the bottom wall of the cavity; and wherein in the closed position the microswitch is away from the bottom wall of the cavity and is not triggered, and in the trigger position the microswitch approaches or contacts the bottom wall of the cavity and is triggered.

According to one exemplary embodiment of the present disclosure, the flip member has a first connection portion, a bent portion, a flat portion and a second connection portion, the first connection portion being connected to the second connection portion via the bent portion and the flat portion in sequence; wherein the flip member is pivotably connected to the cover body via the first connection portion, and the flip member is pivotably connected to the housing via the second connection portion.

According to one exemplary embodiment of the present disclosure, in the closed position the first connection portion abuts against the bottom wall of the cavity.

According to one exemplary embodiment of the present disclosure, the cover assembly may further include: a power device mounted to the housing; and a drive shaft connected to the second connection portion of the flip member; wherein the drive shaft is configured to be rotatably driven by the power device to bring the flip member to rotate about the drive shaft, thereby bringing the cover body to move relative to the housing between the open position and the closed position.

According to one exemplary embodiment of the present disclosure, the housing may further include: a member opening penetrating the housing and communicated with the cavity; wherein the flip member passes through the member opening to be connected to the cover body.

According to one exemplary embodiment of the present disclosure, the housing may further include: a working opening penetrating the housing and communicated with the cavity, the working opening being used to mount a charging port or a refueling port of a vehicle.

According to one exemplary embodiment of the present disclosure, the cover body may include: an inner cover located on an inner side of the cover body and pivotably connected to the flip member, a trigger portion being provided on the inner cover; an outer cover located on an outer side of the cover body, a peripheral edge of the outer cover extending beyond a peripheral edge of the inner cover; and a sealing ring arranged around the inner cover for sealing a gap between the peripheral edge of the inner cover and a side wall of the cavity.

According to one exemplary embodiment of the present disclosure, the cover assembly is used for a charging port or a refueling port of a vehicle.

In the cover assembly provided by the present disclosure, the cover body is pivotably connected to the flip member adjacent one end of the cover body and is movable relative to the flip member between the closed position and the trigger position, so that most region of the cover body can serve as a pressable region for user operation, thereby facilitating user operation and improving user experience.

Other objectives and advantages of the present disclosure will become apparent from the following description of the present disclosure with reference to the accompanying drawings, which will also help to provide a comprehensive understanding of the present disclosure.

### BRIEF DESCRIPTION OF THE DRAWINGS

Fig. 1 is a schematic perspective structural view showing a cover assembly according to an exemplary embodiment of the present disclosure, wherein a cover body is in a closed position;
Fig. 2 is a schematic perspective structural view showing a cover assembly according to an exemplary embodiment of the present disclosure, wherein a cover body is in an open position;
Fig. 3 is a schematic exploded structural view showing a cover assembly according to an exemplary embodiment of the present disclosure;
Fig. 4A is a side view showing a cover assembly according to an exemplary embodiment of the present disclosure, wherein a cover body is in a closed position;
Fig. 4B is an enlarged partial view of Fig. 4A;
Fig. 5A is a side view showing a cover assembly according to an exemplary embodiment of the present disclosure, wherein a cover body is in a trigger position;
Fig. 5B is an enlarged partial view of Fig. 5A;
Fig. 6 is a side view showing a cover assembly according to an exemplary embodiment of the present disclosure, wherein a cover body is in an open position;
Fig. 7 is a side view showing a cover assembly according to another exemplary embodiment of the present disclosure, wherein a cover body is in a closed position;
Fig. 8 is a side view showing a cover assembly according to another exemplary embodiment of the present disclosure, wherein a cover body is in a trigger position; and
Fig. 9 is a side view showing a cover assembly according to another exemplary embodiment of the present disclosure, wherein a cover body is in an open position.

### DETAILED DESCRIPTION OF EMBODIMENTS

The technical solution of the present disclosure will be described in further detail below by means of exemplary embodiments with reference to the accompanying drawings. It should be understood that although directional terms such as "front", "rear", "upper", "lower", "left", "right", etc., are used in the present disclosure to describe various exemplary structural parts and elements of the present disclosure, these terms are used herein for convenience of description only and are determined based on the exemplary orientations shown in the accompanying drawings. Since the exemplary embodiments described in the present disclosure may be arranged in different orientations, these directional terms are for illustration only and should not be construed as a limitation on the present application. Wherever possible, the same or similar reference numerals used in the present disclosure refer to the same or similar components.

In addition, in the following detailed description, for the convenience of explanation, numerous specific details are set forth to provide a comprehensive understanding of the exemplary embodiments of the present disclosure. However, it is obvious that one or more exemplary embodiments can also be implemented without these specific details. In other cases, well-known structures and devices are embodied in a schematic manner to simplify the drawings.

Exemplary embodiments of the present disclosure relate to a cover assembly applied to a charging port or a refueling port of a vehicle.

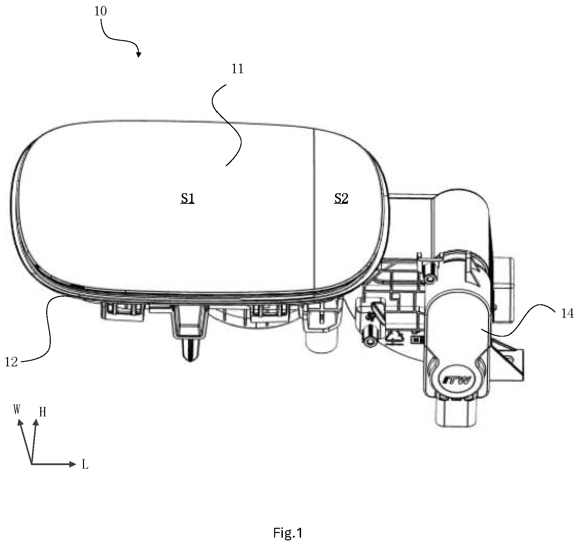

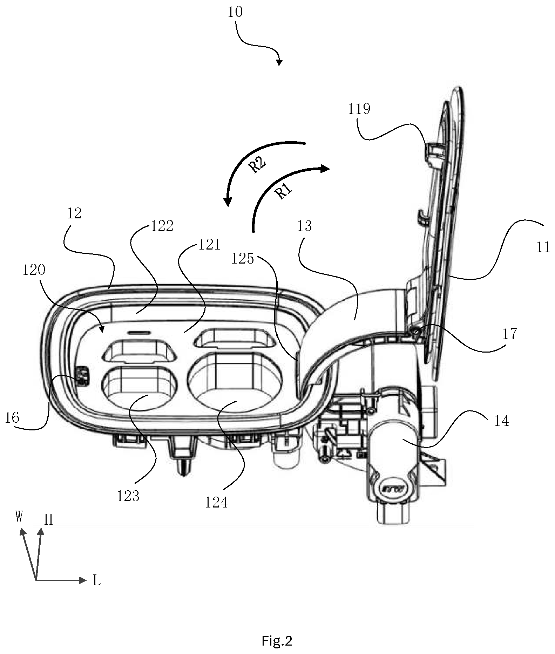

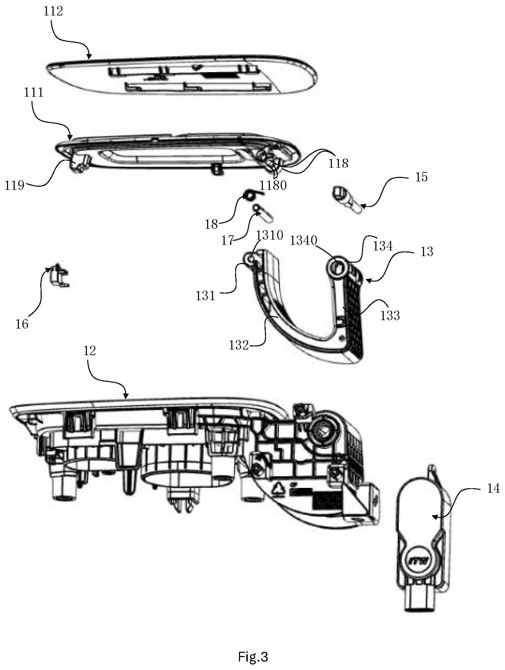

Fig. 1 and Fig. 2 are schematic perspective structural views of a cover assembly 10 according to an exemplary embodiment of the present disclosure, wherein Fig. 1 shows a cover body 11 of the cover assembly 10 being in a closed position P1, and Fig. 2 shows the cover body 11 of the cover assembly 10 being in an open position P2. Fig. 3 is a schematic exploded structural view of a cover assembly 10 according to an exemplary embodiment of the present disclosure. As shown in Figs. 1 to 3, the cover assembly 10 includes components such as the cover body 11, a housing 12, a flip member 13, and a power device 14. The housing 12 may be mounted to a vehicle and connected to a charging port or a refueling port in the vehicle. The flip member 13 is mounted to the housing 12, one end of the flip member 13 being connected to the cover body 11, and the other end of the flip member 13 being connected to the power device 14. The power device 14 is mounted to the housing 12 and can drive the flip member 13 to move, thereby bringing the cover body 11 to move relative to the housing 12 between the closed position P1 (as shown in Fig. 1) and the open position P2 (as shown in Fig. 2), wherein, in the closed position P1, the cover body 11 covers the charging port or the refueling port provided in the housing 12, and in the open position P2, the cover body 11 exposes the charging port or the refueling port provided in the housing 12.

As shown in Figs. 2 to 3, the cover assembly 10 further includes a microswitch 16. According to the present disclosure, a controller in the vehicle may be configured to control the cover body 11 to automatically move from its closed position P1 to its open position P2 upon sensing that the microswitch 16 is triggered, which allows a charging gun or a refueling gun to be inserted into the charging port or the refueling port in the housing 12. The controller in the vehicle may also be configured to control the cover body 11 to automatically move back from its open position P2 to its closed position P1 upon sensing that the charging gun or the refueling gun is pulled out from the charging port or the refueling port in the housing 12.

User may trigger the microswitch 16 by pressing the cover body 11. To this end, the cover body 11 is further switchable between the aforementioned closed position P1 and a trigger position P3, wherein, in closed position P1, the cover body 11 covers the charging port or the refueling port provided in the housing 12 and does not trigger the microswitch 16, and in the trigger position P3, the cover body 11 covers the charging port or the refueling port provided in the housing 12 and triggers the microswitch 16.

According to a design concept of the present disclosure, the cover body 11 is pivotably connected to the flip member 13, and a pivotal movement of the cover body 11 relative to the flip member 13 can trigger a movement of the cover body 11 relative to the housing 12. That is to say, the cover body 11 is configured to be pivotable relative to the flip member 13 to switch between the closed position P1 and the trigger position P3. Specifically, the cover body 11 is connected to the flip member 13 in a manner that the cover body 11 is pivotable relative to the flip member 13 via a pivot mechanism. In a normal state, the cover body 11 is in the closed position P1. When a pressing force is applied to the cover body 11, the cover body 11 is pivoted relative to the flip member 13 from the closed position P1 to the trigger position P3, wherein, in the trigger position P3, the microswitch 16 is triggered, so that the controller in the vehicle controls the cover body 11 to start moving from its closed position P1 to its open position P2. According to the present disclosure, the cover body 11 further includes a trigger portion 119 for triggering the movement of the cover body 11 relative to the housing 12, and the pivotal movement of the cover body 11 relative to the flip member 13 can trigger the movement of the trigger portion 119 relative to the housing 12, so that the trigger portion 119 triggers the microswitch 16, thereby causing the movement of the cover body 11 relative to the housing 12 from its closed position P1 to its open position P2.

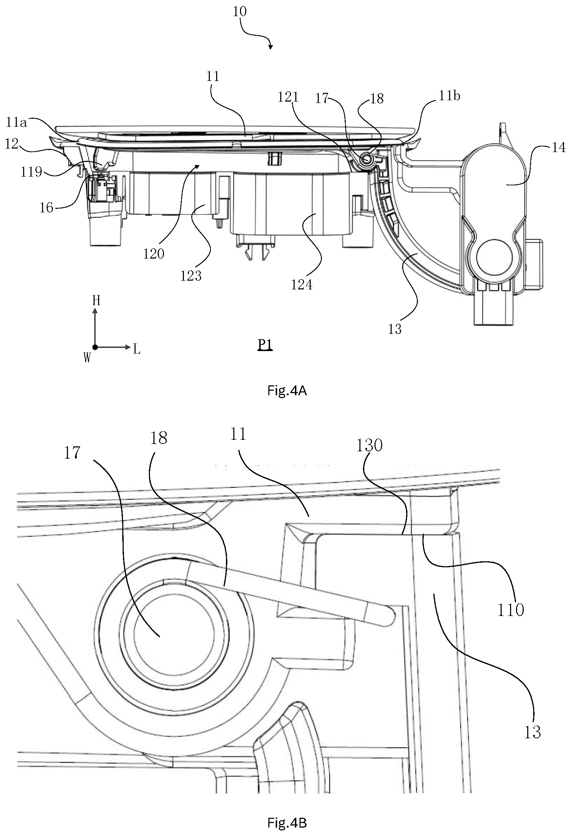

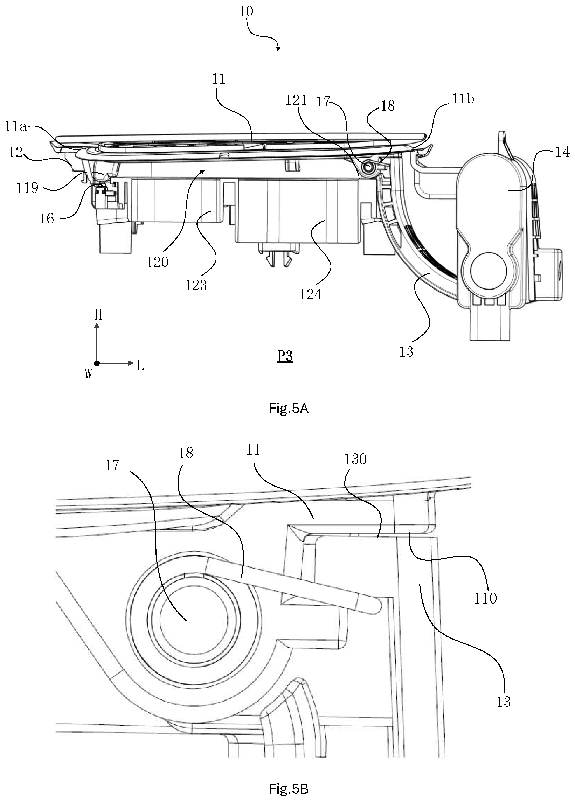

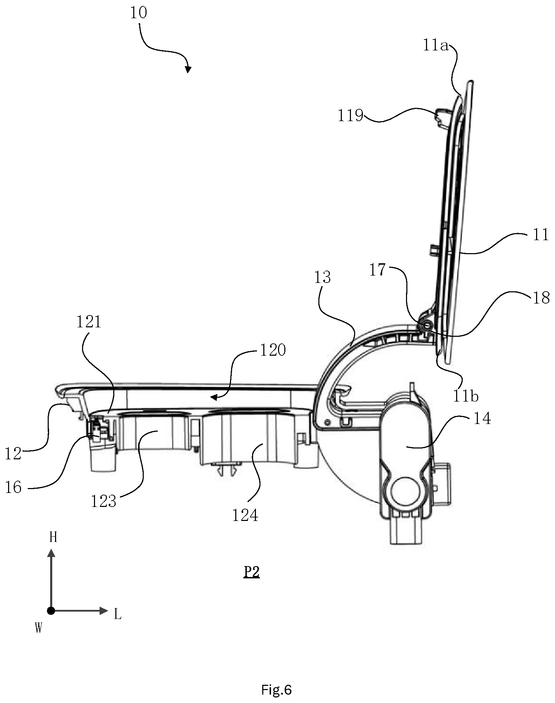

Fig. 4A, Fig. 5A, and Fig. 6 are side views of a cover assembly according to an exemplary embodiment of the present disclosure, respectively. In Fig. 4A, the cover body 11 is in the closed position P1; in Fig. 5A, the cover body 11 is in the trigger position P3; and in Fig. 6, the cover body 11 is in the open position P2. For clarity, the cover body 11 and the housing 12 in Fig. 4A, Fig. 5A, and Fig. 6 are partially cut away to show an internal structure of the cover assembly, especially the mating relationship between the cover body 11, the flip member 13, and the microswitch 16. In addition, Fig. 4B and Fig. 5B are enlarged partial views of Fig. 4A and Fig. 5A, respectively.

For ease of description and illustration, herein, referring to Figs. 1 to 6 for example, the cover assembly 10 has a height direction H, a length direction L, and a width direction W. It should be noted that in Fig. 4A, Fig. 5A, Fig. 6, and Figs. 7 to 9 (which will be described below), the height direction H is shown as an up-down direction of a paper sheet, the length direction L is shown as a left-right direction of the paper sheet, and the width direction W is shown as a direction perpendicular to the paper sheet. Meanwhile, as shown in Fig. 2, a direction in which the cover body 11 moves relative to the housing 12 from the closed position P1 to the open position P2 is a first movement direction (i.e., clockwise direction in the figure) R1, and a direction in which the cover body 11 moves back relative to the housing 12 from the open position P2 to the closed position P1 is a second movement direction (i.e., counterclockwise direction in the figure) R2. Those skilled in the art should understand that the present disclosure is not limited to the first movement direction being clockwise direction in the figure, and the first movement direction may also be set to counterclockwise direction according to actual needs.

According to the present disclosure, referring to Figs. 1 to 6, in the cover assembly 10, the housing 12 has a working region and a mating region. In the working region, the housing 12 has a substantially rectangular cross-sectional shape and includes a bottom wall 121 and a side wall 122 extending from a peripheral edge of the bottom wall 121. The bottom wall 121 and the side wall 122 together define a cavity 120 of substantially rectangular cross-sectional shape. The housing 12 is provided with working openings 123, 124 penetrating the bottom wall 121 for mounting the charging port or the refueling port of the vehicle. For example, when the vehicle is an electric vehicle, one of the working openings 123, 124 is used for mounting a fast charging port, and the other is used for mounting a slow charging port. Meanwhile, the housing 12 is also provided with a member opening 125 penetrating the bottom wall 121 for the flip member 13 to pass therethrough. The member opening 125 is provided on a side of the cavity 120 adjacent to the mating region. In addition, in the working region, one end of the flip member 13 is connected to the cover body 11. And in the mating region, the power device 14 is mounted to the housing 12, and the other end of the flip member 13 is connected to the power device 14.

According to the present disclosure, referring to Figs. 1 to 6, in the cover assembly 10, the cover body 11 has a substantially rectangular cross-sectional shape. The cover body 11 has an inner side facing the cavity 120 of the housing 12 and an outer side opposite to the inner side. Meanwhile, the cover body 11 extends from a first end 11a to a second end 11b opposite to the first end 11a in the length direction L. According to the present disclosure, the cover body 11 includes a trigger portion 119 for triggering the microswitch 16 at a location adjacent to the first end 11a, the trigger portion 119 extending from the inner side of the cover body 11. The cover body 11 includes a pivot connection portion 118 at a location adjacent to the second end 11b, the pivot connection portion 118 extending from the inner side of the cover body 11. It should be noted that in the illustrated embodiment, the trigger portion 119 and the pivot connection portion 118 are provided at locations adjacent to the opposite first end 11a and second end 11b of the cover body 11, respectively. However, in other embodiments, the trigger portion may also be provided at other locations of the cover body, for example, at a location adjacent to the pivot connection portion or substantially in a middle location of the cover body.

According to the present disclosure, referring to Figs. 3 to 6, the cover body 11 is connected to the flip member 13 at the pivot connection portion 118 via a pivot mechanism in a manner that the cover body 11 is pivotable relative to the flip member 13. Specifically, the pivot mechanism includes a pivot shaft 17 and a return member 18. The pivot connection portion 118 of the cover body 11 is formed with a first through hole 1180 (as shown in Fig. 3) for the pivot shaft 17 to pass therethrough, and a first connection portion 131 (to be described in detail below) of the flip member 13 is formed with a second through hole 1310 (as shown in Fig. 3) for the pivot shaft 17 to pass therethrough. The pivot shaft 17 passes through the first through hole 1180 and the second through hole 1310 to connect the cover body 11 and the flip member 13, and the cover body 11 is pivotable about the pivot shaft 17 relative to the flip member 13. The return member 18 is provided at one end of the pivot shaft 17, and the return member 18 abuts between the cover body 11 and the flip member 13 and provides an elastic force to maintain a relative positional relationship therebetween.

According to the present disclosure, the return member 18 is at least configured to provide an elastic force when the cover body 11 is in the trigger position P3, so that the cover body 11 is returned from the trigger position P3 to the closed position P1 after the pressing force applied to the cover body 11 is released. That is, after the pressing force applied to the cover body 11 is released, the return member 18 provides an elastic force to the cover body 11, so that the cover body 11 can pivot back from the trigger position P3 to the closed position P1 about the pivot shaft 17 under the elastic force. The return member 18 may also be configured to provide a certain elastic force when the cover body 11 is in the closed position P1, so as to maintain the cover body 11 in the closed position P1 relative to the flip member 13.

In the illustrated exemplary embodiment, the return member 18 is a torsion spring. The torsion spring includes a main body portion and a first arm and a second arm extending to the main body portion, and the first arm and the second arm can move toward or away from each other in a circumferential direction of the main body portion to provide an elastic force. Specifically, the main body portion of the torsion spring is sleeved around an end of the pivot shaft 17, the first arm of the torsion spring abuts against the cover body 11, and the second arm of the torsion spring abuts against the flip member 13.

It should be noted that the illustrated exemplary embodiment only schematically shows that the cover body 11 and the flip member 13 are connected in a pivotable manner about the pivot shaft. Those skilled in the art should understand that the present disclosure is not limited to such a connection manner, and other connection manners may also be designed according to actual needs, as long as the cover body 11 can move relative to the flip member 13 between the closed position P1 and the trigger position P3.

According to the design concept of the present disclosure, the cover body 11 is connected to the flip member 13 in a pivotable manner about the pivot shaft 17. In this way, the cover body 11 can be divided into a pressable region S1 and a non-pressable region S2 bounded by an orthographic projection of the pivot shaft 17 on the cover body 11, as shown in Fig. 1. The pressable region S1 is a region between the projection of the pivot shaft 17 on the cover body 11 and the first end 11a of the cover body 11 (i.e., the left region of the cover body 11 in Fig. 1), and applying a pressing force on the pressable region S1 can effectively trigger the microswitch 16. The non-pressable region S2 is a region between the projection of the pivot shaft 17 on the cover body 11 and the second end 11b of the cover body 11 (i.e., the right region of the cover body 11 in Fig. 1), and applying a pressing force on the non-pressable region S2 cannot effectively trigger the microswitch 16. Since the pivot shaft 17 is provided adjacent to the second end 11b of the cover body 11, an area of the pressable region S1 is much larger than that of the non-pressable region S2. For example, the area of the pressable region S1 may occupy about 80% of a total area of the cover body 11. In this way, the cover assembly provided by the present disclosure provides a larger pressable region for user, facilitating the user operation.

More specifically, Fig. 4B and Fig. 5B show enlarged partial views near the pivot shaft 17 in Fig. 4A and Fig. 5A, respectively. As shown in Fig. 4B and Fig. 5B, in the non-pressable region S2, the cover body 11 has a first surface 110 facing the flip member 13, and the flip member 13 has a second surface 130 facing the cover body 11. When the cover body 11 is in the closed position P1, as shown in Fig. 4B, under the elastic force of the return member 18, the first surface 110 abuts against the second surface 130 to maintain the relative positional relationship between the cover body 11 and the flip member 13. When the cover body 11 is in the trigger position P3, as shown in Fig. 5B, the first surface 110 has overcome the elastic force of the reset member 18 and has been pivoted by a certain angle about the pivot shaft 17 relative to the second surface 130, thereby being separated from the second surface 130.

According to an exemplary embodiment of the present disclosure, referring to Figs. 2 to 6, the microswitch 16 is provided at the bottom wall 121 of the housing 12, specifically, the microswitch 16 is mounted in a recess or groove provided in the bottom wall 121. The trigger portion 119 for triggering the microswitch 16 is provided on the inner side of the cover body 11 and at a position of the cover body 11 corresponding to the microswitch 16. When the cover body 11 is in the closed position P1, as shown in Fig. 4A, the trigger portion 119 is away from the microswitch 16 and does not trigger the microswitch 16. When the cover body 11 is in the trigger position P3, as shown in Fig. 5A, a head of the trigger portion 119 enters the recess or groove, contacts and triggers the microswitch 16. It should be noted that according to embodiments of the present disclosure, the microswitch 16 is not limited to a contact-type microswitch, and may also be a proximity-type microswitch, for example. In the case of a proximity-type microswitch, the trigger portion 119 can trigger the microswitch 16 merely by approaching the microswitch 16, without necessarily contacting the microswitch 16. In the illustrated exemplary embodiment, the microswitch 16 is positioned centrally in the width direction W of the bottom wall 121 and adjacent to the first end 11a of the cover body 11 in the length direction L of the bottom wall 121. However, the specific position of the microswitch 16 in the bottom wall 121 may be adjusted according to design requirements, for example, the microswitch 16 may be provided at any other position of the bottom wall 121 as long as it does not interfere with normal operation of other components (such as the charging port or the refueling port).

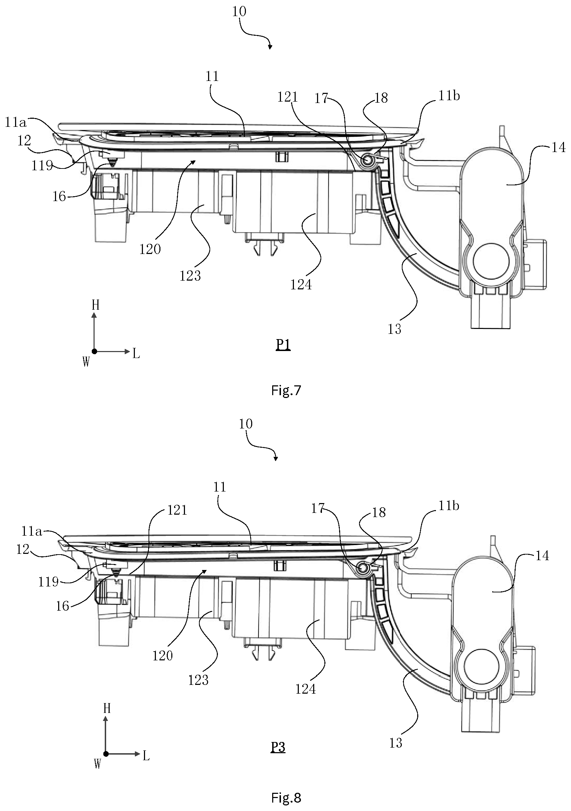

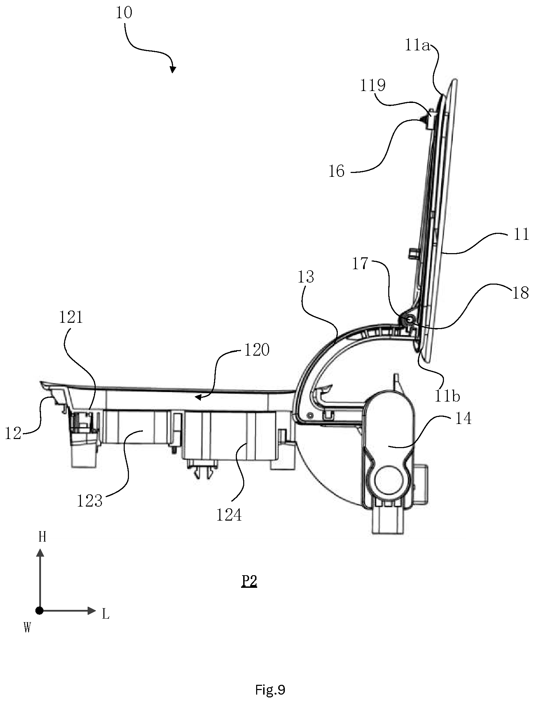

Fig. 7, Fig. 8, and Fig. 9 are side views of a cover assembly 10 according to another exemplary embodiment of the present disclosure, respectively. In Fig. 7, the cover body 11 is in the closed position P1. In Fig. 8, the cover body 11 is in the trigger position P3. And in Fig. 9, the cover body 11 is in the open position P2. The exemplary embodiment shown in Figs. 7 to 9 is substantially the same as the exemplary embodiment shown in Figs. 1 to 6, with the only difference lying in the specific mounting position of the microswitch. The same reference numerals as those in Figs. 1 to 6 are used in Figs. 7 to 9. In the exemplary embodiment shown in Figs. 7 to 9, the microswitch 16 is directly mounted at the trigger portion 119 of the cover body 11, more specifically, at a head of the trigger portion 119. When the cover body 11 is in the closed position P1, as shown in Fig. 7, the microswitch 16 mounted at the trigger portion 119 is away from the bottom wall 121 and is not triggered. When the cover body 11 is in the trigger position P3, as shown in Fig. 8, the microswitch 16 abuts against the bottom wall 121 and is triggered. It should be noted that according to embodiments of the present disclosure, the microswitch 16 is not limited to a contact-type microswitch, and may also be a proximity-type microswitch, for example. In the case of a proximity-type microswitch, the microswitch 16 is triggered merely by approaching the bottom wall 121 without necessarily contacting the bottom wall 121. An advantage of this exemplary embodiment is that it avoids provision of a recess or groove in the bottom wall 121 for mounting the microswitch 16, keeps the integrity of the bottom wall as much as possible, and also prevents a user from a misoperation of attempting to touch the recess or groove.

According to the present disclosure, as shown in Fig. 3, the cover body 11 may further include an inner cover 111 and an outer cover 112 coupled together. The inner cover 111 is provided on a side of the cover body 11 facing the housing 12, and the outer cover 112 is provided on a side of the cover body 11 away from the housing 12. Both the trigger portion 119 and the pivot connection portion 118 are provided on the inner cover 111. Specifically, the trigger portion 119 is provided adjacent to a first end of the inner cover 111, and the pivot connection portion 118 is provided adjacent to a second end of the inner cover 111 opposite to the first end. Moreover, both the trigger portion 119 and the pivot connection portion 118 extend from the inner cover 111. That is to say, the trigger portion 119 and the pivot connection portion 118 may be integrated with the inner cover 111. According to the present disclosure, a peripheral edge of the outer cover 112 extends beyond a peripheral edge of the inner cover 111. That is to say, a size of the outer cover 112 is larger than that of the inner cover 111, and the outer cover 112 covers the inner cover 111. In the illustrated exemplary embodiment, the outer cover 112 and the inner cover 111 are coupled together in a snap-fit manner. In other exemplary embodiments, the outer cover 112 and the inner cover 111 may be coupled by bonding, welding, or the like. In addition, the cover body 11 further includes a sealing ring 113. The sealing ring 113 is arranged around the inner cover 111 for sealing between the peripheral edge of the inner cover 111 and the side wall 122 of the housing 12. However, in other exemplary embodiments, the inner cover 111 and the outer cover 112 may also be integrated according to design requirements.

According to the present disclosure, as shown in Fig. 3, the flip member 13 is an integral member and has a first connection portion 131, a bent portion 132, a flat portion 133, and a second connection portion 134. The first connection portion 131 is pivotably connected to the cover body 11 (more specifically, the inner cover 111), the second connection portion 134 is pivotably connected to the housing 12, and the first connection portion 131 is connected to the second connection portion 134 via the bent portion 132 and the flat portion 133 in sequence. As described above, the first connection portion 131 is provided with the second through hole 1310 for the pivot shaft 17 to pass therethrough. Moreover, the second connection portion 134 is provided with a third through hole 1340 for the drive shaft 15 mated with the power device 14 to pass therethrough. In addition, during the movement of the cover body 11 from the closed position P1 to the open position P2 or from the open position P2 to the closed position P1, the bent portion 132 of the flip member 13 moves through the member opening 125 of the housing 12. Furthermore, according to the design concept of the present disclosure, the first connection portion 131 of the flip member 13 is further designed such that: when the cover body 11 is in the closed position P1, the first connection portion 131 of the flip member 13 abuts moderately against the bottom wall 121 of the housing 12. With such a design of the first connection portion 131, when the controller in the vehicle controls the cover body 11 to automatically move back from its open position P2 to its closed position P1, the first connection portion 131 of the flip member 13 abuts moderately against the bottom wall 121 of the housing 12 to serve as a stop point. In this way, it is possible to avoid provision of a stop point (such as a support pillar below an edge of the cover body 11) for restricting the movement of the cover body 11 in a desired pressable region of the cover body 11, which can expand the area of the pressable region of the cover body 11 and improve the user's pressing feel.

According to the present disclosure, as shown in Fig. 3, the power device 14 drives the flip member 13 via the drive shaft 15. Specifically, the drive shaft 15 is connected to the second connection portion 134 of the flip member 13. The drive shaft 15 is configured to be rotatably driven by the power device 14 to bring the flip member 13 to rotate about the drive shaft 15, thereby bringing the cover body 11 to move relative to the housing 12 between the closed position P1 and the open position P2. According to the illustrated exemplary embodiment of the present disclosure, referring to Fig. 2 for example, during the movement of the cover body 11 relative to the housing 12 from the closed position P1 to the open position P2, the flip member 13 rotates about the drive shaft 15 in the first rotational direction (i.e., clockwise direction in the figure) R1. During the movement of the cover body 11 relative to the housing 12 from the open position P2 to the closed position P1, the flip member 13 rotates about the drive shaft 11 in the second rotational direction (i.e., counterclockwise direction in the figure) R2 opposite to the first rotational direction R1.

According to the present disclosure, components such as the flip member, the pivot shaft, and the drive shaft may be made of a material with high strength and low tendency to elastic deformation, such as a metal or a metal insert formed by injection molding process. Thus, it is possible to ensure that the flip member and the cover body are not prone to vibrate during opening or closing of the cover body.

It should be noted that the cover assembly provided by the present disclosure may further include other components and/or structures necessary for realizing its functions and/or effects in addition to the components and/or structures described and illustrated above, and these components and/or structures are not described and illustrated herein for brevity.

Although the present disclosure has been described in conjunction with exemplary embodiments, various alternatives, modifications, variations, improvements, and/or substantial equivalents, whether currently known or foreseeable in the future, may become apparent to those skilled in the art. In addition, technical effects and/or technical problems described in the present disclosure are exemplary rather than limiting; therefore, the technical content of the present disclosure may be used to solve other technical problems and have other technical effects. Accordingly, the foregoing exemplary embodiments of the present disclosure are intended to be illustrative rather than limiting. Various changes may be made without departing from the spirit or scope of the present disclosure. Solutions described in various exemplary embodiments may be freely combined without structural or principle conflicts. The protection scope of the present disclosure is defined by the claims and their equivalents.

Certain embodiments of the invention are described in the following clauses:
Clause 1. A cover assembly (10) comprising:
   a housing (12) having a cavity (120);
   a cover body (11) movable relative to the housing (12) between an open position (P2) in which the cover body (11) exposes the cavity (120) and a closed position (P1) in which the cover body (11) covers the cavity (120); and
   a flip member (13) connected to the cover body (11) and configured to bring the cover body (11) to move relative to the housing (12) between the open position (P2) and the closed position (P1);
   wherein the cover body (11) is pivotably connected to the flip member (13), and a pivotal movement of the cover body (11) relative to the flip member (13) can trigger a movement of the cover body (11) relative to the housing (12).
Clause 2. The cover assembly (10) according to clause 1, wherein,
   the cover body (11) comprises a trigger portion (119) for triggering the movement of the cover body (11) relative to the housing (12), and the pivotal movement of the cover body (11) relative to the flip member (13) can trigger a movement of the trigger portion (119) relative to the housing (12).
Clause 3. The cover assembly (10) according to clause 2, wherein,
   the cover body (11) has a first end (11a) and a second end (11b) opposite to the first end (11a), the trigger portion (119) is provided at the cover body (11) adjacent to the first end (11a), and the cover body (11) is pivotably connected to the flip member (13) adjacent to the second end (11b).
Clause 4. The cover assembly (10) according to clause 3, further comprising:
   a pivot shaft (17) via which the cover body (11) is pivotably connected to the flip member (13);
   wherein the cover body (11) is pivotable about the pivot shaft (17) relative to the flip member (13) between the closed position (P1) and a trigger position (P3), wherein in the closed position (P1), the cover body (11) abuts against the flip member (13) so that the cover body (11) is kept to be fixed relative to the flip member (13), and in the trigger position (P3), the movement of the trigger portion (119) of the cover body (11) triggers the movement of the cover body (11) from the closed position (P1) to the open position (P2).
Clause 5. The cover assembly (10) according to clause 4, further comprising:
   a return member (18) provided on the pivot shaft (17) and abutting between the cover body (11) and the flip member (13);
   wherein the return member (18) is configured to provide an elastic force when the cover body (11) is in the trigger position (P3), so that the cover body (11) is returned from the trigger position (P3) to the closed position (P1) after a pressing force applied to the cover body (11) is released.
Clause 6. The cover assembly (10) according to clause 5, wherein,
   the return member (18) is further configured to provide an elastic force when the cover body (11) is in the closed position (P1), so that the cover body (11) is kept to be fixed relative to the flip member (13).
Clause 7. The cover assembly (10) according to clause 5, wherein,
   the cover body (11) is divided into a pressable region (S1) and a non-pressable region (S2) bounded by an orthographic projection of the pivot shaft (17) on the cover body (11), and an area of the pressable region (S1) is larger than that of the non-pressable region (S2).
Clause 8. The cover assembly (10) according to clause 7, wherein,
   in the non-pressable region (S2), the cover body (11) has a first surface (110) facing the flip member (13), and the flip member (13) has a second surface (130) facing the cover body (11);
   wherein in the closed position (P1) the first surface (110) abuts against the second surface (130); and
   wherein in the trigger position (P3) the first surface (110) is separated from the second surface (130).
Clause 9. The cover assembly (10) according to clause 4, further comprising:
   a microswitch (16) provided at a bottom wall (121) of the cavity (120);
   wherein the trigger portion (119) extends from an inner side of the cover body (11) toward the bottom wall (121) of the cavity (120); and
   wherein in the closed position (P1) the trigger portion (119) does not trigger the microswitch (16), and in the trigger position (P3) the trigger portion (119) triggers the microswitch (16).
Clause 10. The cover assembly (10) according to clause 4, further comprising:
   a microswitch (16) provided at the trigger portion (119);
   wherein the trigger portion (119) extends from an inner side of the cover body (11) toward the bottom wall (121) of the cavity (120); and
   wherein in the closed position (P1) the microswitch (16) is away from the bottom wall (121) of the cavity (120) and is not triggered, and in the trigger position (P3) the microswitch (16) approaches or contacts the bottom wall (121) of the cavity (120) and is triggered.
Clause 11. The cover assembly (10) of any one according to clauses 1 to 10, wherein,
   the flip member (13) has a first connection portion (131), a bent portion (132), a flat portion (133) and a second connection portion (134), the first connection portion (131) being connected to the second connection portion (134) via the bent portion (132) and the flat portion (133) in sequence;
   wherein the flip member (13) is pivotably connected to the cover body (11) via the first connection portion (131), and the flip member (13) is pivotably connected to the housing (12) via the second connection portion (134).
Clause 12. The cover assembly (10) according to clause 11, wherein,
   in the closed position (P1) the first connection portion (131) abuts against the bottom wall (121) of the cavity (120).
Clause 13. The cover assembly (10) according to clause 11, further comprising:
   a power device (14) mounted to the housing (12); and
   a drive shaft (15) connected to the second connection portion (134) of the flip member (13);
   wherein the drive shaft (15) is configured to be rotatably driven by the power device (14) to bring the flip member (13) to rotate about the drive shaft (15), thereby bringing the cover body (11) to move relative to the housing (12) between the open position (P2) and the closed position (P1).
Clause 14. The cover assembly (10) of any one according to clauses 1 to 10, wherein,
   the housing (12) further comprises: a member opening (125) penetrating the housing (12) and communicated with the cavity (120);
   wherein the flip member (13) passes through the member opening (125) to be connected to the cover body (11).
Clause 15. The cover assembly (10) of any one according to clauses 1 to 10, wherein,
   the housing (12) further comprises: a working opening (123, 124) penetrating the housing (12) and communicated with the cavity (120), the working opening (123, 124) being used to mount a charging port or a refueling port of a vehicle.
Clause 16. The cover assembly (10) of any one according to clauses 1 to 10, wherein the cover body (11) comprises:
   an inner cover (111) located on an inner side of the cover body (11) and pivotably connected to the flip member (13), a trigger portion (119) being provided on the inner cover (111);
   an outer cover (112) located on an outer side of the cover body (11), a peripheral edge of the outer cover (112) extending beyond a peripheral edge of the inner cover (111); and
   a sealing ring (113) arranged around the inner cover (111) for sealing a gap between the peripheral edge of the inner cover (111) and a side wall (122) of the cavity (120).
Clause 17. The cover assembly (10) of any one according to clauses 1 to 10, wherein,
   the cover assembly (10) is used for a charging port or a refueling port of a vehicle.

## Claims

1. A cover assembly (10) comprising:
a housing (12) having a cavity (120);
a cover body (11) movable relative to the housing (12) between an open position (P2) in which the cover body (11) exposes the cavity (120) and a closed position (P1) in which the cover body (11) covers the cavity (120); and
a flip member (13) connected to the cover body (11) and configured to bring the cover body (11) to move relative to the housing (12) between the open position (P2) and the closed position (P1);
wherein the cover body (11) is pivotably connected to the flip member (13), and a pivotal movement of the cover body (11) relative to the flip member (13) can trigger a movement of the cover body (11) relative to the housing (12).

2. The cover assembly (10) according to claim 1, wherein,
the cover body (11) comprises a trigger portion (119) for triggering the movement of the cover body (11) relative to the housing (12), and the pivotal movement of the cover body (11) relative to the flip member (13) can trigger a movement of the trigger portion (119) relative to the housing (12).

3. The cover assembly (10) according to claim 2, wherein,
the cover body (11) has a first end (11a) and a second end (11b) opposite to the first end (11a), the trigger portion (119) is provided at the cover body (11) adjacent to the first end (11a), and the cover body (11) is pivotably connected to the flip member (13) adjacent to the second end (11b).

4. The cover assembly (10) according to claim 3, further comprising:
a pivot shaft (17) via which the cover body (11) is pivotably connected to the flip member (13);
wherein the cover body (11) is pivotable about the pivot shaft (17) relative to the flip member (13) between the closed position (P1) and a trigger position (P3), wherein in the closed position (P1), the cover body (11) abuts against the flip member (13) so that the cover body (11) is kept to be fixed relative to the flip member (13), and in the trigger position (P3), the movement of the trigger portion (119) of the cover body (11) triggers the movement of the cover body (11) from the closed position (P1) to the open position (P2).

5. The cover assembly (10) according to claim 4, further comprising:
a return member (18) provided on the pivot shaft (17) and abutting between the cover body (11) and the flip member (13);
wherein the return member (18) is configured to provide an elastic force when the cover body (11) is in the trigger position (P3), so that the cover body (11) is returned from the trigger position (P3) to the closed position (P1) after a pressing force applied to the cover body (11) is released.

6. The cover assembly (10) according to claim 5, wherein,
the return member (18) is further configured to provide an elastic force when the cover body (11) is in the closed position (P1), so that the cover body (11) is kept to be fixed relative to the flip member (13).

7. The cover assembly (10) according to claim 5 or claim 6, wherein,
the cover body (11) is divided into a pressable region (S1) and a non-pressable region (S2) bounded by an orthographic projection of the pivot shaft (17) on the cover body (11), and an area of the pressable region (S1) is larger than that of the non-pressable region (S2).

8. The cover assembly (10) according to claim 7, wherein,
in the non-pressable region (S2), the cover body (11) has a first surface (110) facing the flip member (13), and the flip member (13) has a second surface (130) facing the cover body (11);
wherein in the closed position (P1) the first surface (110) abuts against the second surface (130); and
wherein in the trigger position (P3) the first surface (110) is separated from the second surface (130).

9. The cover assembly (10) according to any one of claims 4 to 8, further comprising:
a microswitch (16) provided at a bottom wall (121) of the cavity (120);
wherein the trigger portion (119) extends from an inner side of the cover body (11) toward the bottom wall (121) of the cavity (120); and
wherein in the closed position (P1) the trigger portion (119) does not trigger the microswitch (16), and in the trigger position (P3) the trigger portion (119) triggers the microswitch (16).

10. The cover assembly (10) according to any one of claims 4 to 9, further comprising:
a microswitch (16) provided at the trigger portion (119);
wherein the trigger portion (119) extends from an inner side of the cover body (11) toward the bottom wall (121) of the cavity (120); and
wherein in the closed position (P1) the microswitch (16) is away from the bottom wall (121) of the cavity (120) and is not triggered, and in the trigger position (P3) the microswitch (16) approaches or contacts the bottom wall (121) of the cavity (120) and is triggered.

11. The cover assembly (10) according to any one of claims 1 to 10, wherein,
the flip member (13) has a first connection portion (131), a bent portion (132), a flat portion (133) and a second connection portion (134), the first connection portion (131) being connected to the second connection portion (134) via the bent portion (132) and the flat portion (133) in sequence;
wherein the flip member (13) is pivotably connected to the cover body (11) via the first connection portion (131), and the flip member (13) is pivotably connected to the housing (12) via the second connection portion (134).

12. The cover assembly (10) according to claim 11, wherein,
in the closed position (P1) the first connection portion (131) abuts against the bottom wall (121) of the cavity (120).

13. The cover assembly (10) according to claim 11 or claim 12, further comprising:
a power device (14) mounted to the housing (12); and
a drive shaft (15) connected to the second connection portion (134) of the flip member (13);
wherein the drive shaft (15) is configured to be rotatably driven by the power device (14) to bring the flip member (13) to rotate about the drive shaft (15), thereby bringing the cover body (11) to move relative to the housing (12) between the open position (P2) and the closed position (P1).

14. The cover assembly (10) according to any one of claims 1 to 13, wherein,
the housing (12) further comprises: a member opening (125) penetrating the housing (12) and communicated with the cavity (120);
wherein the flip member (13) passes through the member opening (125) to be connected to the cover body (11), and/or wherein,
the housing (12) further comprises: a working opening (123, 124) penetrating the housing (12) and communicated with the cavity (120), the working opening (123, 124) being used to mount a charging port or a refueling port of a vehicle.

15. The cover assembly (10) according to any one of claims 1 to 14, wherein the cover body (11) comprises:
an inner cover (111) located on an inner side of the cover body (11) and pivotably connected to the flip member (13), a trigger portion (119) being provided on the inner cover (111);
an outer cover (112) located on an outer side of the cover body (11), a peripheral edge of the outer cover (112) extending beyond a peripheral edge of the inner cover (111); and
a sealing ring (113) arranged around the inner cover (111) for sealing a gap between the peripheral edge of the inner cover (111) and a side wall (122) of the cavity (120), and/or wherein,
the cover assembly (10) is used for a charging port or a refueling port of a vehicle.
